# EUROPÄISCHE PATENTSCHRIFT

(11) **EP 4 313 682 B1**
(45) Veröffentlichungstag und Bekanntmachung des Hinweises auf die Patenterteilung: **07.10.2026**
(21) Anmeldenummer: 22717351.5
(22) Anmeldetag: 23.03.2022
(51) Int. Cl.: B60Q 1/28, B60R 19/52, F21S 43/239, F21S 43/243, F21S 43/245, F21S 43/15, F21S 45/37

(54) **BAUGRUPPE DES LEUCHTENDEN FAHRZEUGKÜHLERGRILLS**
ILLUMINATED VEHICLE RADIATOR GRILL ASSEMBLY
ENSEMBLE CALANDRE DE VÉHICULE ÉCLAIRÉ

(30) Priorität: 26.03.2021 CZ 20210153
(43) Veröffentlichungstag der Anmeldung: 07.02.2024
(73) Patentinhaber: Skoda Auto a.s., 293 01 Mladá Boleslav (CZ)
(72) Erfinder: GOLD, Petr, 742 45 Fulnek (CZ); ADAMKOVIC, Alex, 05351 Kluknava (SK)
(86) Internationale Anmeldenummer: PCT/CZ2022/000017
(87) Internationale Veröffentlichungsnummer: WO 2022/199728

(56) Entgegenhaltungen:
- WO-A1-2020/212072
- CN-A- 110 657 396
- CN-A- 112 124 239
- CN-U- 211 875 923
- DE-A1- 102018 207 270
- FR-A1- 2 630 077
- FR-A1- 3 033 191
- JP-A- 2005 268 068
- JP-A- 2012 113 970
- JP-A- 2015 054 622
- US-A1- 2018 272 927
- US-B2- 9 045 076

## Beschreibung

### Technisches Gebiet

Die vorliegende Erfindung betrifft einen Fahrzeugkühlergrill mit Lichtfunktionalität, insbesondere handelt es sich um eine Kühlergrillbaugruppe, die einen Lichtleiter umfasst, der mit einer seiner Oberfläche vor das Fahrzeug leuchtet und mit anderer seiner Oberfläche den Kühlergrill beleuchtet.

### Bisheriger Stand der Technik

Der Fahrzeugkühlergrill dient in erster Linie dazu, die Luftdurchlässe zum Motor, Fahrzeugkühler und/oder in den Innenraum durch die Klimaanlage abzugrenzen. Standardmäßig handelt es sich um ein in der Montageöffnung im Fahrzeugfrontbereich befestigtes Kunststoffteil, wobei dieses Kunststoffteil eine Reihe von Lücken für den Luftdurchlass aufweist. In den letzten Jahren wurde der Kühlergrill oft durch eine Beleuchtungsbaugruppe ergänzt oder ersetzt, ein solcher beleuchteter Kühlergrill beleuchtet dann den Bereich vor dem Fahrzeug und erhöht die Sichtbarkeit des Fahrzeugs, so dass er beispielsweise als Tagfahrleuchte dienen kann. Darüber hinaus ist der beleuchtete Kühlergrill ein sehr markantes Designelement des Fahrzeuges, da er eine, relativ große Fläche im Fahrzeugfrontbereich abdeckt, der am meisten sichtbar ist. Die Ausgestaltung des leuchtenden Kühlergrills kann dann beispielsweise die Fahrzeuge einer bestimmten Marke deutlich von anderen Fahrzeugen differenzieren. Die leuchtenden Kühlergrills können weiterhin zur Luftzufuhr verwendet werden, oder sie können die Montageöffnung für den Kühlergrill vollständig abschließen und die Luft kann dann beispielsweise durch das Gitter im Stoßfänger zugeführt werden.

Ein Beispiel eines leuchtenden Kühlergrills ist beispielsweise aus dem Dokument CZ201800475 bekannt. Die beschriebene Lösung umfasst eine Lichtquelle, einen Lichtleiter, einen Rahmen und eine durchsichtige Frontabdeckung, die zusammen eine geschlossene Baugruppe bilden, wobei die spezifische Form dieser Komponenten das endgültige Erscheinungsbild des Kühlergrills und des emittierten Lichtes prägt. Diese Lösung erfordert jedoch den Austausch eines standardmäßig undurchsichtigen Kühlergrills und blockiert die Luftzufuhr, was für einige Fahrzeugtypen nicht geeignet sein muss.

Ein weiterer leuchtender Kühlergrill ist aus dem Dokument WO200518987 bekannt. Dieses Dokument beschreibt einen Kühlergrill mit lichtundurchlässigen Rippen, wobei dieser Kühlergrill von hinten mit einem Lichtleiter mit Punktlichtquellen an den Enden hinterleuchtet wird. Das Licht aus dem Lichtleiter beleuchtet also die Rippen, die das Licht vor das Fahrzeug reflektieren. In einer Ausführung dieser Lösung ist der Lichtleiter so angeordnet, dass er durch die Luftdurchgangsöffnungen im Kühlergrill sichtbar ist, so dass der Lichtleiter auch direkt vor das Fahrzeug leuchtet. Die Homogenität des ausgestrahlten Lichts ist bei dieser Lösung jedoch unbefriedigend, da die vom Lichtleiter weiter entfernten Rippen mit geringerer Intensität und auf einem kleineren Teil ihrer Fläche als die dem Lichtleiter näherliegenden Rippen beleuchtet werden, und in der Ausführung mit einem sichtbaren Lichtleiter ist dieser Lichtleiter teilweise durch die Rippen bedeckt. Ein weiterer Nachteil dieser Lösung besteht in der geringeren Modifizierbarkeit des Erscheinungsbildes des Kühlergrills und der Lichtform, da der Lichtleiter nur an Stellen sichtbar ist, an denen sich zwischen den Kühlergrillrippen die Lücken befinden, und die Rippen nur um die Kühlergrilllücken herum beleuchtet werden.

Aus der CN 211 875 923 U ist ebenfalls ein leuchtender Kühlergrill für ein Kraftfahrzeug bekannt. Hier ist eine Lichtquelle an einer Lichteinkopplungsfläche eines Lichtleiters angeordnet, der Licht von der Lichtquelle zu einer Lichteinkopplungsfläche einer Lichtverteilerlinse leitet. Innerhalb der Lichtverteilerlinse wird das Licht mehrfach totalreflektiert, bis es schließlich durch Kühlergrilllücken in eine Umgebung des Kraftfahrzeuges abgestrahlt wird. Es sind also mindestens zwei lichtleitende Bauteile vorgesehen, der Lichtleiter und die Lichtverteilerlinse, was die Herstellung aufwändig und teuer macht und die Wartungsanfälligkeit erhöht.

Auch aus der DE 10 2018 207 270 A1 und der JP 2015 054622 A ist jeweils ein beleuchtbarer Kühlergrill für ein Kraftfahrzeug bekannt. Dabei ist jeweils eine Lichtquelle optional hinter einem Lichtleiter angeordnet, wobei der Lichtleiter das durch die Lichtquelle abgestrahlte Licht in einen auszuleuchtenden Bereich vor dem Kraftfahrzeug lenkt.

Es wäre also geeignet eine Lösung vorzuschlagen, welche einen leuchtenden Fahrzeugkühlergrill bietet, der ein homogenes Licht ausstrahlt, und welche es ermöglicht, das spezifische Erscheinungsbild des Kühlergrills und die spezifische Form des ausstrahlenden Lichts je nach Bedarf oder Anforderungen anzupassen.

### Darstellung der Erfindung

Die Nachteile der aus dem Stand der Technik bekannten Lösungen werden partiell durch die Baugruppe des leuchtenden Fahrzeugkühlergrills umfassend den Kühlergrillrahmen, den Kühlergrill, die Lichtleiste und den Lichtleiter teilweise gelöst. Der Kühlergrill umfasst eine Frontseite, die vor das Fahrzeug gerichtet ist, und die gegenüberliegende Rückseite, die in den Raum unter der Fahrzeugfrontklappe gerichtet ist. Der Lichtleiter umfasst die Lichteintrittsfläche und die Lichtleiste verläuft entlang der Lichteintrittsfläche, so dass das Licht von der Lichtleiste durch die Lichteintrittsfläche eintritt, sich durch den Lichtleiter ausbreitet und aus diesem ausgestrahlt wird. Der Kühlergrillrahmen, der Lichtleiter und der Randbereich des Kühlergrills grenzen zusammen ein Hohlraum ab, wobei sich dieser Hohlraum auf der Frontseite des Kühlergrills befindet und die Lichtleiste im Hohlraum angeordnet ist. Der Lichtleiter ist dabei für die Ausstrahlung des Lichtes von der Lichtleiste vor das Fahrzeug und zur Frontseite des Kühlergrills ausgelegt, zum Beispiel auf die Rippen, wenn der Kühlergrill diese aufweist. Bevorzugt ist der Kühlergrillrahmen oder der Kühlergrill für den Einbau in die Montageöffnung im Fahrzeugfrontbereich ausgelegt. Der Kühlergrill besteht vorzugsweise aus undurchsichtigem und lichtundurchlässigem Material. Solches Material ist gewöhnlich billiger und widerstandsfähiger gegen Beschädigung und Verschmutzung als durchsichtiges oder lichtdurchlässiges Material. Daher ist die Baugruppe des leuchtenden Kühlergrills mit lichtundurchlässigem Kühlergrill vorteilhafter als die voll lichtdurchlässigen Kühlergrills, bei denen Kratzer oder Schmutz das Erscheinungsbild und die Leuchtkraft wesentlich beeinträchtigen können und bei denen der lichtdurchlässige Kühlergrill leichter beschädigt werden kann, beispielsweise beim Aufprall.

Die Lichtleiste umfasst bevorzugt LED-Lichtquellen und kann auch mit einer Steuereinheit für die Lichtquellen und ggf. auch Kühlelemente aufweisen. In den Hohlraum führt dann gewöhnlich eine Durchlaufhülse mit elektrischen Kabelstrang für die Einspeisung der Lichtquellen. Die Lichtleiste kann auch Lichtleiterelemente enthalten, wie z.B. eine lichtdurchlässige Abdeckung zur Lichthomogenisierung. In der Frontansicht kopiert der Lichtleiter vorteilhaft die Kontur des Kühlergrills und/oder des Kühlergrillrahmens oder eines Teils davon. Besonders vorteilhaft durchläuft der Lichtleiter den größten Teil der Breite des Kühlergrills entlang seines oberen Randes bzw. entlang des oberen Randes des sichtbaren Teils des Kühlergrills. Der obere Rand selbst ist gewöhnlich hinter dem Hohlraum und dem Kühlergrillrahmen verborgen.

Der Lichtleiter kann auch entlang der Seitenränder des Kühlergrills / des Kühlergrillrahmens, der unteren Kante, entlang des gesamten Umfangs usw. verlaufen. Der Lichtleiter und/oder die Lichtleiste können aus mehreren Teilen bestehen, die aneinander bündig anschließen oder eine Zwischenspalte aufweisen können, zum Beispiel kann der Lichtleiter durch einen seiner Abschnitte entlang der oberen Kante des Kühlergrills und der andere Abschnitt des Lichtleiters entlang der unteren Kante des Kühlergrills verlaufen, wobei der Lichtleiter nicht an den Seitenrändern des Kühlergrills durchläuft.

Die beschriebene Anordnung der Baugruppe, insbesondere derartige Anordnung des Lichtleiters, dass er sich vorne vor dem Kühlergrill befindet, ermöglicht diesem Lichtleiter das Licht sowohl an die Frontseite des Kühlergrills zu seiner Beleuchtung als auch direkt nach vorne vor das Fahrzeug auszustrahlen, beispielsweise auf die Fahrbahn vor dem Fahrzeug oder in Richtung der entgegenkommenden Fahrzeuge. Die Baugruppe, insbesondere der Lichtleiter mit einer Lichtleiste, leuchtet also indirekt, durch die Reflektion des Lichtes von der Frontseite des Kühlergrills, und leuchtet direkt, indem sie Licht vom Lichtleiter vor das Fahrzeug ausstrahlt. Die Beleuchtung des Kühlergrills von der Frontseite erhöht die Sichtbarkeit des Fahrzeuges und verbessert auch das Erscheinungsbild des Fahrzeuges; das direkte Licht aus dem Lichtleiter erhöht zudem die Sichtbarkeit, es kann beispielsweise als Tagfahrlicht dienen, und ist ein markantes Gestaltungselement und leuchtet teilweise auch die Straße vor dem Fahrzeug aus. Insbesondere der sichtbare Teil des Lichtleiters wirkt als eine Lichtlinie, die zumindest einen Teil der Kontur des Kühlergrills und/oder des Kühlergrillrahmens oder eines Teils davon kopiert; da die Gestalt des Kühlergrills oft ein der charakteristischen Elemente für eine bestimmte Automarke ist, erhöht diese Lichtlinie die Erkennbarkeit der betreffenden Fahrzeuge.

Erfindungsgemäß sind die Lichtleiste und der Lichtleiter für die Ausgabe von Lichtsignalen ausgelegt, wobei die Leuchtsignalisierung eine Fahrtrichtungsanzeige umfasst. Dabei überdeckt der Lichtleiter entweder teilweise den Kühlergrillrahmen, und zwar an den Seiten des Kühlergrills, nahe einem Scheinwerfer, so dass dieser Teil des Lichtleiters, der für die Fahrtrichtungsänderungsanzeige bestimmt ist, so nah wie möglich an den Scheinwerfer heranreicht und beim Blinken dieser Teil des Lichtleiters als bündige Verlängerung des Blinkers im Scheinwerfer wirkt. Oder der betreffende Teil des Lichtleiters geht nicht über den Kühlergrillrahmen durch, sondern der Kühlergrillrahmen ist an dieser Stelle unterbrochen und der Lichtleiter geht durch die Spalte zwischen der oberen und unteren Hälfte des Kühlergrillrahmens hindurch.

Bevorzugt ist der durch Kühlergrillrahmen, Lichtleiter und den äußeren Teil des Kühlergrills abgegrenzte Hohlraum wasserdicht verschlossen, während er ein Entlüftungselement zur Feuchtigkeitsabfuhr aufweist. Die Feuchtigkeit kann in den Hohlraum beispielsweise aufgrund möglicher Leckagen und auch durch das Material eindringen. Der Lichtleiter kann beispielsweise aus Polymethylmethacrylat hergestellt werden, der Kühlergrill kann beispielsweise aus gewöhnlichem lichtundurchlässigem Kunststoff erzeugt werden, der Kühlergrillrahmen kann auch aus Kunststoff erzeugt und mit einem reflektierenden Material auf der Außenfläche beschichtet werden. Einige Teile der erfindungsgemäßen Baugruppe können auch aus Metall sein.

Darüber hinaus kann eine leuchtende Kühlergrillbaugruppe einen Hilfsrahmen umfassen, der einige der anderen Komponenten der Baugruppe zusammenhält und auch Teil des Kühlergrills sein kann. Der Hilfsrahmen kann beispielsweise einen Lichtleiter an den Kühlergrill und/oder den Kühlergrillrahmen an das Kühlergrill anbringen. Der Hohlraum für die Lichtleiste kann auch teilweise durch einen Hilfsrahmen abgegrenzt werden.

Der Lichtleiter kann auf einem Teil seiner Oberfläche ein Abschirmelement aufweisen. Ein derartiges Abschirmelement beeinflusst dann die Form des ausgestrahlten Lichts, sei es zur Frontseite des Kühlergrills oder vor das Fahrzeug. Gleichzeitig kann das Abschirmelement auf der dem Lichtleiter zugewandten Seite ein reflektierendes Element aufweisen, so dass es Licht zurück in den Lichtleiter reflektiert, damit es in eine andere, gewünschte Richtung ausgestrahlt werden kann.

Der Lichtleiter umfasst bevorzugt mindestens zwei Lichtaustrittsflächen, wobei die erste Lichtaustrittsfläche gegenüber der Lichteintrittsfläche und die zweite Lichtaustrittsfläche zwischen der ersten Lichtaustrittsfläche und der Lichteintrittsfläche angeordnet sind. Die erste Lichtaustrittsfläche kann also das durch den Lichtleiter geleitete Licht ausstrahlen, ohne in diesem reflektiert werden zu müssen, so dass sie mit größerer Intensität als die zweite Lichtaustrittsfläche leuchtet, die hauptsächlich im Lichtleiter reflektiertes Licht ausstrahlt. Die zweite Lichtaustrittsfläche kann die erste Lichtaustrittsfläche direkt mit der Lichteintrittsfläche verbinden, oder es können aus weiteren Flächen dazwischen liegen. Diese Flächen können eben sein, aber sie können auch gebogen oder durch abgewinkelte Flächen gebildet sein. Bevorzugt weist der Lichtleiter oder zumindest sein Hauptteil, in den das Licht ein- und austritt, über seine gesamte Länge einen annähernd konstanten Querschnitt auf, um eine annähernd konstante Leuchtkraft zu gewährleisten. Es ist aber auch möglich, einen Lichtleiter mit variablem Querschnitt zu verwenden, so dass z.B. die sichtbare Fläche des Lichtleiters auf einem Teil des Lichtleiters breiter sein kann als anderswo, zum Beispiel entlang der Oberkante des Kühlergrills breiter als entlang der Seitenränder usw.

Die erste Lichtaustrittsfläche kann durch ihre Ausrichtung für die Ausstrahlung des Lichts von Lichtleiste vor das Fahrzeug ausgelegt sein. Wie oben ausgeführt, befindet sich die erste Lichtaustrittsfläche gegenüber der Lichtleiste, bzw. der Lichteintrittsfläche, an die die Lichtleiste gerichtet ist, so dass diese Fläche üblicherweise am intensivsten von allen Lichtleiterflächen leuchtet. Somit wird das Licht dann intensiver vor das Fahrzeug ausgestrahlt als auf die Frontseite des Kühlergrills.

Die erste Lichtaustrittsfläche kann alternativ durch ihre Ausrichtung für die Lichtausstrahlung von der Lichtleiste an die Frontseite des Kühlergrills ausgelegt sein. Somit wird die Frontseite des Kühlergrills intensiver beleuchtet, sodass der Kühlergrill besser ausgeleuchtet und besser sichtbar ist. Bevorzugt umfasst der Kühlergrill Rippen und insbesondere diese Rippen werden dann beleuchtet. Dank der Anordnung der Lichtleiter vornan gegenüber dem Kühlergrill werden die Rippen von den Seiten und von vorne beleuchtet, so dass sie gut sichtbar sind und die Baugruppe des leuchtenden Kühlergrills dann das dominierende Designelement im Fahrzeugfrontbereich sein kann. Weniger intensives Licht wird dann direkt vor das Fahrzeug ausgestrahlt, jedoch standardmäßig ist der sichtbare Teil des Lichtleiters beim Betrachten der Baugruppe von vorne immer noch heller als die beleuchtete Frontseite des Kühlergrills.

Bevorzugt umfasst der Lichtleiter einen über den größten Teil der Länge des Lichtleiters verlaufenden flachen Teil, wobei der flache Teil im Querschnitt eine viereckige Form mit einem Paar kürzerer einander gegenüberliegender Seiten und einem Paar längerer einander gegenüberliegender Seiten aufweist. Zum Beispiel kann es ein Rechteck sein, aber auch ein Trapez, Parallelogramm oder allgemeines Viereck ist möglich. Die längeren Seiten sind bevorzugt mindestens doppelt so lang wie jedwede der kürzeren Seiten, wobei eine der kürzeren Seiten für die Ausrichtung vor das Fahrzeug und eine der längeren Seiten für die Ausrichtung zur Frontseite des Kühlergrills bestimmt ist. Diese beide Seiten, eine der längeren Seiten und eine der kürzeren Seiten, können dann dem Querschnitt der ersten Lichtaustrittsfläche und der zweiten Lichtaustrittsfläche, bzw. der zweiten Lichtaustrittsfläche und der ersten Lichtaustrittsfläche entsprechen. Durch die Verwendung der kürzeren Seite für die Ausrichtung vor das Fahrzeug, d.h. durch die Nutzung der Tatsache, dass die von vorne betrachtet sichtbare Vorderfläche des Lichtleiters weniger breit bzw. hoch ist, wird sichergestellt, dass dieser sichtbare Teil des Lichtleiters eine, relativ dünne Lichtlinie bildet, während die breitere Seite, d.h. die auf die Mitte des Kühlergrills gerichtete breitere Fläche des Lichtleiters, für eine, relativ homogene Ausleuchtung des Kühlergrills sorgt.

Der genannte flache Teil kann auch die Form eines Polygons oder eine allgemeine Form mit abgerundeten Flächen usw. haben. Bevorzugt weist dieser flache Teil jedoch mindestens die angegebene kürzere Seite und die längere Seite, die vorzugsweise mindestens doppelt so lange ist, auf, wobei die kürzere Seite vor das Fahrzeug gerichtet ist und die genannte Lichtlinie auf (einem Teil) des Umfangs des Kühlergrills darstellt, und die längere Seite, die zur Mitte des vorderen Teils des Kühlergrills gerichtet ist, ermöglicht den Kühlergrill homogen auszuleuchten.

Vorteilhaft wird genutzt, dass die Lichtleiste und der Lichtleiter für die Ausgabe von weiteren Lichtsignalen ausgelegt sind, wobei die Lichtsignalisierung aus einer Menge umfassend Batterieladezustandsanzeige und Fahrzeugentriegelungs-/verriegelungsanzeige ausgewählt wird. Auch die gewöhnliche Beleuchtung, z.B. Tagfahrlicht, kann als eine Form der Lichtsignalisierung angesehen werden. Diese Signalisierung kann eine Funktion des Gesamtfahrzeuges sowie der Baugruppe des leuchtenden Kühlergrills selbst sein. Die Auslegung der Lichtleiste für die Ausgabe von Lichtsignalen kann beispielsweise durch deren Einspeisung über eine Steuereinheit realisiert werden. Bevorzugt ist die Lichtleiste so ausgelegt, dass nur ein Teil davon unabhängig leuchten kann, oder vorzugsweise umfasst die Baugruppe mehrere Lichtleisten, die unabhängig steuerbar sind. Als Lichtsignalisierung kann hier generell jegliche Änderung der Lichtausgabe (Ein-, Ausschalten, Farben- und/oder Intensitätsänderung, Blinken, Änderung der Blinkfrequenz usw.) bei der gesamten oder einem Teil der Beleuchtungsleiste oder bei einigen Beleuchtungsleisten, falls mehrere in der Baugruppe vorhanden sind, als Reaktion auf einen bestimmten Impuls. Insbesondere ändert sich die Lichtausstrahlung bei den Lichtquellen, die Teil der Lichtleiste sind, vorzugsweise LED-Lichtquellen. Die Lichtleiste kann auch Lichtquellen in verschiedenen Farben umfassen oder eine farbige lichtdurchlässige Abdeckung usw. aufweisen. Den Impuls kann beispielsweise die Druckknopfbetätigung durch den Fahrer, wie im Falle von Tagfahrlicht und Fahrtrichtungsanzeige oder im Falle der Fernentriegelung des Fahrzeugs, oder ein Befehl des Steuergeräts, beispielsweise bei einer Batterieladezustandsanzeige oder beim automatischen oder schlüssellosen Ent-/Verriegelung des Fahrzeuges darstellen. Die Steuereinheit, welche die Lichtsignalisierung besorgt, kann Teil der Baugruppe des leuchtenden Kühlergrills sein, z. B. kann sie direkt an den Lichtquellen im Hohlraum angeordnet werden, es kann die Scheinwerfersteuereinheit sein, insbesondere im Falle einer Fahrtrichtungssignalisierung, die vorzugsweise mit der Blinkleuchte im Scheinwerfer synchronisiert werden kann, oder es kann sich um eine andere Steuereinheit an anderer Stelle im Fahrzeug handeln, z. B. die Gesamtsteuereinheit des Fahrzeugs.

Bevorzugt weist die Frontseite des Kühlergrills eine Narbung zur Ablenkung des einfallenden Lichts auf. Beispielsweise kann es sich um ein Aufrauen der Oberfläche, die Bildung von Vorsprüngen oder Vertiefungen auf der Oberfläche usw. handeln. Diese Elemente der Narbung können praktisch beliebiger Größe sein, zum Beispiel können sie die Größe von einigen Millimetern aufweisen, so dass die einzelnen Elemente der Narbung mit bloßem Auge erkennbar sind, oder sie können viel kleiner sein, so dass sie im Wesentlichen eine fortlaufende Oberflächenbeschichtung bilden. Die Narbung kann beispielsweise eine bessere Homogenität des vom Kühlergrill reflektierten Lichtes sicherstellen, oder sie kann die Homogenität mildern, indem sie das Licht in einer bestimmten Narbung reflektiert, so dass beispielsweise hellere Reflexionen und dunklere Stellen auf dem beleuchteten Teil des Kühlergrills sichtbar sind. Die Narbung kann beispielsweise auf den Vorderflächen des Kühlergrills, auf den Seiten- und/oder Oberflächen der Rippen oder des Gitters usw. ausgebildet werden. Eine solche Narbung ist daher grundsätzlich eine weitere Möglichkeit, das Erscheinungsbild des Kühlergrills nach spezifischen Bedürfnissen oder Anforderungen weiter zu modifizieren.

Ähnliche Narbung kann auch auf dem Lichtleiter, beispielsweise auf einer Lichteintrittsfläche oder auf einer der Lichtaustrittsflächen ausgebildet werden. Vorzugsweise handelt es sich um eine Narbung mit homogenisierenden Elementen. Homogenisierende Elemente kann alternativ oder zusätzlich auch das Lichtleitermaterial aufweisen.

### Erläuterung der Zeichnungen

Die Darstellung der Erfindung wird weiter anhand von Ausführungsbeispielen erläutert, die unter Nutzung von Zeichnungen beschrieben sind, wobei zeigen die:
- Fig. 1: eine schematische Darstellung der Vorderansicht eines Personenkraftfahrzeuges, das die Baugruppe des erfindungsgemäßen leuchtenden Kühlergrills umfasst,
- Fig. 2: eine schematische Darstellung einer detaillierten Vorderansicht der Baugruppe des leuchtenden Kühlergrills aus Fig. 1,
- Fig. 3: eine Darstellung des Schnitts A-A aus Fig. 2, wobei dieser Schnitt durch die mittlere Rippe des Kühlergrills geführt wird und wobei eine Ausführung mit einer über dem Lichtleiter verlaufenden Lichtleiste dargestellt ist,
- Fig. 4: den in Fig. 2 angedeuteten Schnitt A-A, der in einer alternativen Ausführung der Baugruppe des leuchtenden Kühlergrills geführt wird, wobei in dieser Ausführung die Lichtleiste hinter dem Lichtleiter verläuft,
- Fig. 5: ein Detail aus dem Schnitt in Fig. 3, auf dem der obere Teil der erfindungsgemäßen Baugruppe besser sichtbar ist, insbesondere die Form des Lichtleiters, die Form des durch den Kühlergrillrahmen begrenzten Hohlraums, die Oberkante der Frontseite des Kühlergrills und des Lichtleiters und die Anordnung der Lichtleiste in diesem Hohlraum,
- Fig. 6: ein Detail aus dem Schnitt in Fig. 4, auf dem der obere Teil der erfindungsgemäßen Baugruppe analog zu Fig. 5 dargestellt ist, und die
- Fig. 7: eine schematische Darstellung eines Teils der Baugruppe des leuchtenden Kühlergrills und des Frontscheinwerfers des Fahrzeugs in einer Frontansicht, wobei in dieser Ausführung der erfindungsgemäßen Baugruppe ein Teil des Lichtleiters zur Blinkleuchte im Scheinwerfer gerichtet ist und die Baugruppe für die Einschaltung der Fahrtrichtungsänderungsanzeige zusammen mit der Blinkleuchte ausgelegt ist.

### Ausführungsbeispiele der Erfindung

Im Folgenden wird die Erfindung anhand der in den Figuren dargestellten Ausführungsbeispiele erläutert.

Gegenstand der vorliegenden Erfindung ist die Baugruppe 1 des leuchtenden Kühlergrills. Diese Baugruppe umfasst einen Kühlergrillrahmen 2 und Kühlergrill 3, die eine Standardform für diese aus dem Stand der Technik bekannten Bauteile aufweisen können. Der Kühlergrillrahmen 2 ist also für die Einbau in die Montageöffnung im Frontbereich des Personenkraftfahrzeuges und der Kühlergrill 3 für die Anbringung an den Kühlergrillrahmen 2 und partiell zur Abdeckung dieser Montageöffnung ausgelegt. In anderen Ausführungen wird der Kühlergrill 3 am Fahrzeug befestigt und der Kühlergrillrahmen 2 kann an den Kühlergrill 3 angebracht werden. Standardmäßig umfasst der Kühlergrill 3 die Luftdurchlassöffnungen, aber auch Ausführungen ohne derartige Öffnungen sind möglich. Die Luft wird dann dem Fahrzeug beispielsweise durch die Öffnungen im Stoßfänger oder andere Teile des Fahrzeuges zugeführt.

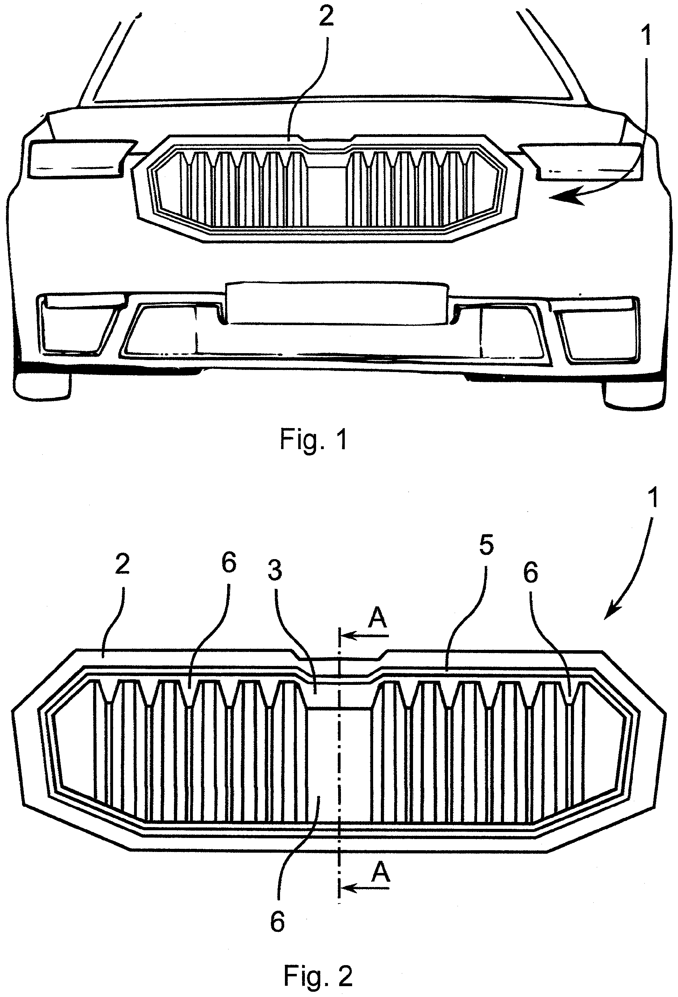

Ein Fahrzeug mit Kühlergrillrahmen 2 und Kühlergrill 3 ist in Fig. 1 dargestellt, wobei das Detail dieser Teile der erfindungsgemäßen Baugruppe die Fig. 2 zeigt. In der dargestellten Ausführung umfasst der Kühlergrill 3 vertikale Rippen 6, zwischen denen sich vertikale Luftdurchlassöffnungen befinden. Wie der Fig. 2 zu entnehmen ist, verengen sich die Rippen 6 nach vorne und in der Mitte des Kühlergrills 3 ist eine Rippe 6 deutlich breiter als die anderen. Die äußeren Rippen 6 sind kürzer als die anderen Rippen 6, da sie sich der Kontur des Kühlergrills 3 anpassen. In der dargestellten Ausführung ist der gesamte Kühlergrill 3 einstückig aus einem lichtundurchlässigen Material, zum Beispiel aus einem gewöhnlichen schwarzen Kunststoff, normalerweise gegossen oder gepresst, aber möglich sind auch Ausführungen, bei denen der Kühlergrill 3 von mehreren Teilen besteht, zum Beispiel können die Rippen 6 einzeln angeschraubt oder an den Rand des Kühlergrills 3 geklebt werden. Alternativ oder zusätzlich sind auch Ausführungen möglich, bei denen der Kühlergrill 3 oder einige seiner Teile aus lichtdurchlässigem oder durchsichtigem Material erzeugt sind.

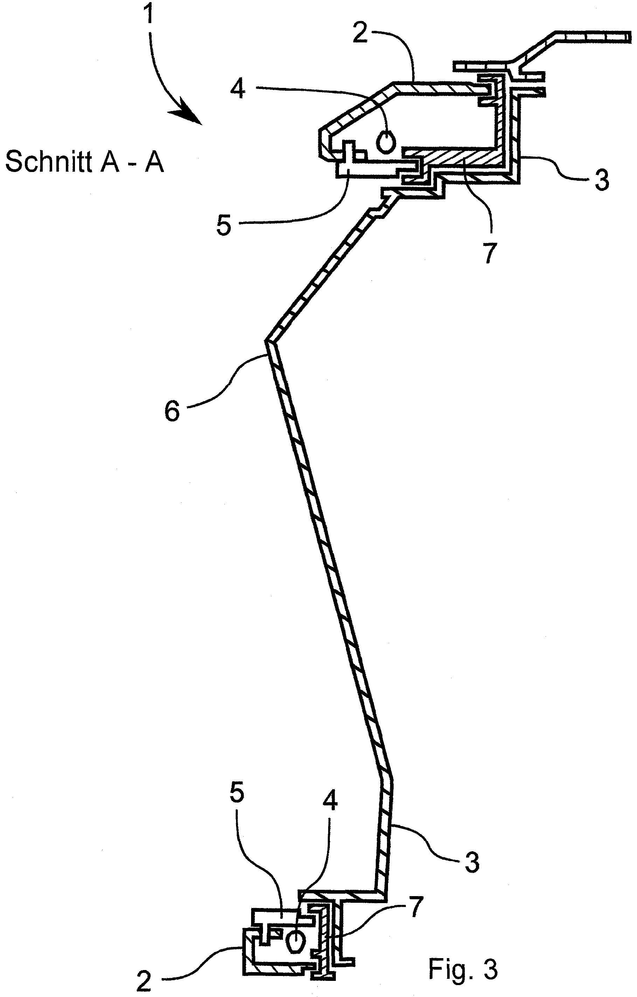

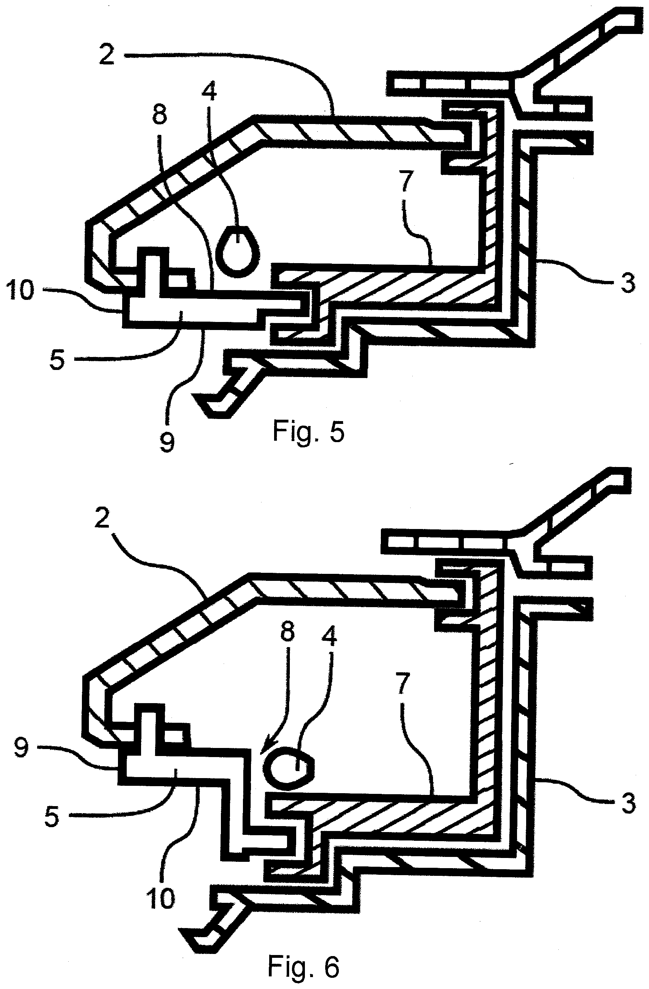

Ferner umfasst die Baugruppe 1 des leuchtenden Kühlergrills einen Lichtleiter 5, eine Lichtleiste 4 und einen Hilfsrahmen 7 für die Anbringung des Lichtleiters 5. Die Anordnung dieser Bauteile in einem Ausführungsbeispiel ist der Fig. 3 und das entsprechende Detail der Fig. 5 zu entnehmen. Der Kühlergrillrahmen 2 in dargestellter Ausführung umläuft den ganzen Kühlergrill 3 und damit den gesamten Umfang der Montageöffnung. Die Verbindung des Kühlergrills 3 mit dem Kühlergrillrahmen 2 wird durch ein Hilfsrahmen 7 realisiert, diese Komponenten werden beispielsweise verschweißt, verklebt, verschraubt, mit formschlüssiger Verbindung, mittels flexible Kunststoffclips usw. verbunden. Wie der Fig. 3 zu entnehmen ist, begrenzen der Kühlergrill 3 zusammen mit dem Kühlergrillrahmen 2 und Lichtleiter 5 einen Hohlraum entlang des gesamten Umfangs des Kühlergrills 3. Der Kühlergrillrahmen 2 ist an einem Rand zum Lichtleiter 5 und an dem anderen Rand zum Hilfsrahmen 7 befestigt, der zum Vorderrand der Frontseite des Kühlergrills 3 befestigt ist. Somit ist der Lichtleiter 5 an dem einen Rand, nämlich dem Vorderrand, am Kühlergrillrahmen 2 angebracht, und an dem anderen, dem hinteren Rand ist er am Hilfsrahmen 7 befestigt, bzw. er ist an dem Kühlergrill 3 mittels des Hilfsrahmens 7 befestigt.

Die Lichtleiste 4 befindet sich innerhalb des Hohlraums und bei der Einschaltung strahlt das Licht auf den Lichtleiter 5 aus, konkret auf seine Lichteintrittsfläche 8, die in Fig. 5 die Oberseite des Lichtleiters 5 darstellt.

Die Lichtleiste 4 kann als eine Reihe von Punktlichtquellen ausgebildet werden, beispielsweise LED-Chips, die auf den Lichtleiter 5 gerichtet sind. In der Ausführung aus Fig. 2 und 3, wo der Lichtleiter 5 um den ganzen Kühlergrill 3 verläuft, läuft auch die Lichtleiste 4 um den ganzen Kühlergrill 3 herum, wobei sie in der Frontansicht eine polygonale Form entsprechend der Form des Lichtleiters 5 und Kühlergrillrahmens 2 aufweist. Alternativ kann die Lichtleiste 4 einen Lichtleiter 5 und eine Menge von Lichtquellen umfassen, oder sie kann eine Menge der Lichtquellen und eine Linse oder Linsen zur Lichthomogenisierung aufweisen, die am Umfang des Kühlergrills 3 angeordnet sind. Darüber hinaus kann die Lichtleiste 4 beispielsweise die Form eines Lichtschlauches aufweisen, d.h. die Stromleiter, Lichtquellen, vorzugsweise LEDs, und eine Außenhülle umfassen, die lichtdurchlässig und flexibel ist.

Vorzugsweise ist der oben beschriebene Hohlraum wasserdicht, so dass die Lichtleiste 4 und etwaige andere elektronische Bauteile vor Feuchtigkeit geschützt sind. Vorzugsweise weist die erfindungsgemäße Baugruppe die Entlüftungselemente auf, welche die Feuchtigkeitsabfuhr aus dem Hohlraum besorgen. Ein Entlüftungselement kann beispielsweise eine mit semipermeabler Membrane ausgestattete Öffnung darstellen, die Wasserdampfluft aus dem Hohlraum herauslässt, jedoch das Eindringen der Luft durch das Entlüftungselement in das Innere verhindert. Das Entlüftungselement ist beispielsweise eine Durchlaufhülse aus Gummi oder Kunststoff mit einem Luftfilter. Ein Luftfilter hat zum Beispiel die Form einer Rolle und die Struktur eines feinen Netzes zum Einfangen von Staubpartikeln.

Der Lichtleiter 5 in der Ausführung aus Fig. 3 und 5 umfasst den im Querschnitt rechteckigen Hauptteil, von dem ein Vorsprung zur Befestigung am Kühlergrillrahmen 2 nach oben und ein Vorsprung zur Befestigung am Hilfsrahmen 7 nach hinten führt. Als Vorsprünge kann beispielsweise eine Reihe von Stiften oder ähnlichen Vorsprüngen sein, die in regelmäßigen Abständen hervorstehen, und/oder es kann beispielsweise ein über die gesamte Länge des Lichtleiters 5 fortlaufender Vorsprung sein. In alternativen Ausführungen kann der Lichtleiter 5 an die Stelle geklebt, verschraubt usw. werden. Die Ausrichtung und die Anordnung des Lichtleiters 5 und der Lichtleiste 4 sind so gewählt, dass das Licht aus der Lichtleiste 4 vom Lichtleiter 5 sowohl vor das Fahrzeug als auch in die Mitte der Frontseite des Kühlergrills 3, d.h. vor allem auf die Rippen 6 und in die Zwischenräume ausstrahlt. In der Ausführung aus Fig. 5 ist diese Lichtausstrahlung so gewährleistet, dass der Lichtleiter 5 die erste Lichtaustrittsfläche 9, die einer der längeren Seite des rechteckigen Hauptteils entspricht, und die zweite Lichtaustrittsfläche 10 umfasst, die einer der kürzeren Seiten des rechteckigen Teils des Querschnitts entspricht. Die erste Lichtaustrittsfläche 9 ist dabei auf die Rippen 6ausgerichtet, d.h. nach unten in dem oberen Bereich des Kühlergrills 3, nach oben in dem unteren Bereich des Kühlergrills 3, nach links im rechten Teil des Kühlergrills 3 usw. Die zweite Lichtaustrittsfläche ist dann nach vorne gerichtet, so dass das von ihr austretende Licht die Fahrbahn vor dem Fahrzeug beleuchtet und/oder in Richtung der entgegenkommenden Fahrzeuge ausstrahlt. Die Lichtleiste 4 befindet sich dabei gegenüber der ersten Lichtaustrittsfläche 9, so dass diese Fläche das Licht mit größerer Intensität als die zweite Lichtaustrittsfläche ausstrahlt, zu der das
Licht durch das Innere des Lichtleiters 5 reflektiert wird, wobei die Neigung der zweiten Lichtaustrittsfläche 10 etwa 90° bezogen auf die Richtung von der Lichtleiste 4 zur ersten Lichtaustrittsfläche 9 beträgt.

Da die schmalere Wand des Lichtleiters 5 vor das Fahrzeug und die breitere Wand, vorzugsweise mindestens doppelt so breit, auf die Rippen 6 gerichtet ist, werden die Rippen 6 von einem homogeneren Licht beleuchtet, wobei die genannte schmalere Wand eine Lichtlinie um den Kühlergrill 3 bildet. Diese Linie kann als Tagfahrlicht dienen und verbessert das Erscheinungsbild des Fahrzeuges sowie die Beleuchtung der Rippen 6. Die Rippen 6, eventuell weitere Flächen der Frontseite des Kühlergrills 3, können eine Narbung für die Ablenkung des einfallenden Lichts aufweisen, das von diesen Flächen oder Rippen 6 reflektiert wird und so das Gesamtbild des Kühlergrills 3, bzw. die gesamte Baugruppe 1 des leuchtenden Kühlergrills und des ganzen Fahrzeuges beeinflusst. Diese Narbung können beispielsweise die abgewinkelten Flächen, Ritzen, Vorsprünge oder Vertiefungen verschiedener Formen und Größen darstellen. Sowohl die Vorsprünge als auch die Vertiefungen können abgerundet sowie scharfkantig sein. Jede Kombination der oben beschriebenen Elemente oder anderer Elemente, welche die Reflexion des Lichts auf den Oberflächen beeinflussen, kann ebenfalls verwendet werden. Der Lichtleiter 5 kann homogenisierende Elemente aufweisen, beispielsweise eine Narbung auf der Oberfläche, wie z.B. verschiedene abgewinkelte Flächen, Vorsprünge oder Vertiefungen, oder indem beispielsweise reflektierende Partikel oder Blasen dem Material des Lichtleiters 5 hinzugefügt werden.

In einigen Ausführungen ist ein Teil des Lichtleiters 5 mit einem oder mehreren Abschirmelementen beschichtet, z. B. mit einer auf die Oberfläche des Lichtleiters 5 angeklebten lichtundurchlässigen Folie oder lichtundurchlässigen Lackierung usw. Das Schattierungselement kann auf der dem Lichtleiter 5 zugewandten Seite reflektierend sein, so dass es das Licht nicht absorbiert, sondern in den Lichtleiter 5 zurückreflektiert wird. Ein Teil der ersten Lichtaustrittsfläche 9 oder der zweiten Lichtaustrittsfläche 10 kann beispielsweise für die Ablenkung des ausgestrahlten Lichts abgeschirmt sein, beispielsweise um die Beleuchtung der Rippen 6 anzupassen. Auch andere Flächen auf dem Lichtleiter 5 können ebenfalls abgeschirmt werden, beispielsweise solche, die zum Kühlergrillrahmen 2 oder zum Hilfsrahmen 7 gerichtet sind. In einigen Ausführungen muss die erste Lichtaustrittsfläche 9 nicht mit der zweiten Lichtaustrittsfläche 10 benachbart sein, es können zwischen ihnen eine oder mehrere weitere Flächen vorhanden sein, die das Licht beispielsweise hin zur Fahrbahn ausstrahlen, oder sie können abgeschirmt sein. Möglich ist auch eine Ausführung, bei der die Kante zwischen der ersten Lichtaustrittsfläche 9 und der zweiten Lichtaustrittsfläche 10 abgerundet ist, so dass es keinen scharfen Übergang zwischen diesen Flächen gibt.

Die Gestalt des Lichtleiters 5 kann generell im Wesentlichen beliebig sein, umfasst aber vorzugsweise eine erste Lichtaustrittsfläche 9, die gegenüber der Lichteintrittsfläche 8 angeordnet ist, und eine zweite Lichtaustrittsfläche 10, die zumindest teilweise zwischen der ersten Lichtaustrittsfläche 9 und der Lichteintrittsfläche 8 verläuft. Diese beiden Flächen ermöglichen insbesondere mit einem Lichtleiter 5 sowohl die Rippen 6 als auch den Bereich vor dem Fahrzeug zu beleuchten. Bevorzugt weist der flache Hauptteil des Lichtleiters 5, der in der Frontansicht die Kontur des Kühlergrillrahmens 2 kopiert, einen Querschnitt in Form eines Polygons, beispielsweise eines Vierecks. Vorzugsweise hat ein derartiges Polygon eine kürzere Seite, die der vor das Fahrzeug leuchtenden Fläche entspricht, und eine längere Seite, die der Fläche entspricht, welche die Rippen 6 beleuchtet.

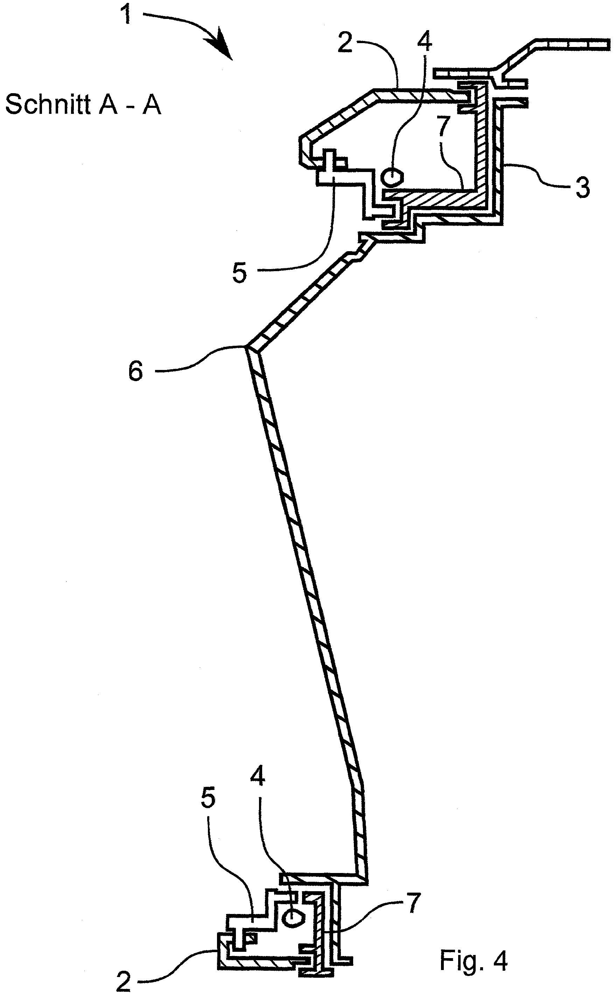

In einer in Fig. 4 und 6 dargestellten alternativen Ausführung ist als die erste Lichtaustrittsfläche 9 die schmalere Fläche des Lichtleiters 5, der vor das Fahrzeug gerichtet ist, und als die zweite Lichtaustrittsfläche 10 ist die breitere Fläche, welche die Rippen 6 und ihre Umgebung beleuchtet. Die Lichtleiste 4 befindet sich dann hinter dem Lichtleiter 5. Die Richtung nach hinten, d.h. hinter ein Objekt, ist hier die Richtung von dem Kühlergrill 3 hin zum Raum unter der Frontklappe oder zum Fahrgastraum usw., die entgegengesetzte Richtung nach vorne oder vor ein Objekt ist die Richtung parallel zur normalen Fahrtrichtung, d.h. die vor das Fahrzeug gerichtete Richtung. In dieser Ausführung strahlt die den Kühlergrill 3 und den Kühlergrillrahmen 2 umlaufende Lichtlinie, die bei der Frontansicht des Fahrzeuges sichtbar ist, mit größerer Intensität als in den Ausführungen aus Fig. 3 und 5. Dagegen sind die Rippen 6 mit geringerer Intensität beleuchtet. Die Gestalt des Lichtleiters 5 wird in dieser alternativen Ausführung so modifiziert, damit hinter ihm ein Raum für die Anordnung der Lichtleiste 4 vorhanden ist. Der Vorsprung am Hauptteil des Lichtleiters 5, der die Befestigung am Hilfsrahmen 7 besorgt, hat daher im Querschnitt eine L-Form, damit die Stelle der Befestigung am Hilfsrahmen 7 gegenüber dem Hauptteil des Lichtleiters 5 versetzt ist und die Anordnung der Lichtleiste 4 nicht hindert.

In alternativen Ausführungen können auf einem Teil des Umfangs des Kühlergrills 3 der Lichtleiter 5 mit der Lichtleiste 4 so geformt und angeordnet werden, dass die Vorderfläche des Lichtleiters 5 heller leuchtet und auf einem anderen Teil des Umfangs derart, dass die der Mitte des Kühlergrills 3 zugewandte Fläche des Lichtleiters 5 heller leuchtet. In einer anderen Ausführung können entlang des Lichtleiters 5 zwei parallele Lichtleisten 4 verlaufen, die gegenüber der ersten sowie zweiten Lichtaustrittsfläche 9, 10 angeordnet sind, so dass die Intensität der Beleuchtung vor dem Fahrzeug sowie in der Richtung zur Frontseite des Kühlergrills 3 erhöht wird.

In weiteren alternativen Ausführungen muss der Lichtleiter 5 nicht über den gesamten Umfang des Kühlergrills 3 verlaufen, sondern beispielsweise nur entlang der oberen Hälfte des Umfangs. In einer weiteren Ausführung kann der Lichtleiter 5 entlang der unteren Hälfte des Umfangs des Kühlergrills 3 verlaufen. In einer weiteren Ausführung kann es nur entlang der horizontalen Randabschnitte des Kühlergrills 3 verlaufen, d. h. entlang des oberen und unteren Randes. In einer weiteren Ausführung umfasst die Baugruppe 1 des leuchtenden Kühlergrills keinen Hilfsrahmen 7, so dass der Lichtleiter 5 sowie der Kühlergrillrahmen 2 direkt an dem Kühlergrill 3 befestigt sind. In einigen Ausführungen kann der Lichtleiter 5 in mehrere Teile aufgeteilt werden, die aneinander bündig anschließen, so dass sie als ein kompakter Lichtleiter wirken, oder Zwischenspalten aufweisen können. Die Lichtleiste 4 kann in einigen Ausführungen auch in mehrere Teile aufgeteilt werden. Die Gestalt des Kühlergrills 3, die Anzahl und Form der Rippen 6, die Form des Kühlergrillrahmens 2 und die Gestalt des Lichtleiters 5 können sich in verschiedenen Ausführungen unterscheiden. Der Kühlergrill 3 kann geneigte oder horizontale Rippen 6 umfassen. Bevorzugt sind die Rippen 6 jedoch ungefähr vertikal, beispielsweise weichen sie um höchstens 25° von der Vertikale ab, wobei sie von oben und/oder von unten beleuchtet werden, um das eindrucksvollste Erscheinungsbild des Kühlergrills 3 zu erzielen. Gewöhnlich sind dann die Rippen 6 in der linken Hälfte des Kühlergrills 3 in entgegengesetzter Richtung geneigt als in der rechten Hälfte des Kühlergrills 3, so dass der Neigungswinkel der Rippen 6 zueinander bis zu 50° beträgt. In einigen Ausführungen kann der Kühlergrill 3 anstelle von Rippen 6 beispielsweise ein Gitter aufweisen, oder seine Frontseite kann eine durchgehende Fläche bilden.

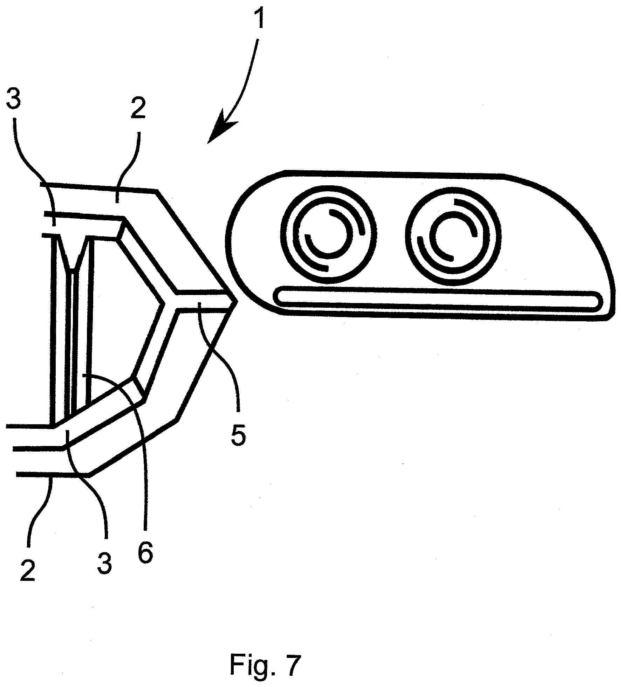

Vorteilhaft kann die gesamte Lichtleiste 4 eventuell alle Lichtleisten 4 auf einmal in einer standardweißen Farbe nicht nur ein-/ausgeschaltet werden, sondern die erfindungsgemäße Baugruppe stellt zusätzliche Beleuchtungsfunktionalität bereit. So dienen erfindungsgemäß die Lichtleisten 4 als Ergänzung zum Blinker, so dass beim Abbiegen nicht nur der klassische Blinker im Frontscheinwerfer aufleuchtet, sondern auch der seitliche Teil der Lichtleiste 4. In einer derartigen erfindungsgemäßen Ausführung kann der Lichtleiter 5 auch teilweise den Kühlergrillrahmen 2 überdecken, und zwar an den Seiten des Kühlergrills 3, nahe dem Scheinwerfer, so dass dieser Teil des Lichtleiters 5, der für die Fahrtrichtungsänderungsanzeige bestimmt ist, so nah wie möglich an die Scheinwerfer heranreicht und beim Blinken dieser Teil des Lichtleiters 5 als bündige Verlängerung des Blinkers im Scheinwerfer wirkt. Eine derartige Ausführung ist in einer Teilansicht in Fig. 7 dargestellt, wo der linke Scheinwerfer des Fahrzeuges und das linke Ende der erfindungsgemäßen Baugruppe schematisch dargestellt sind. Der Lichtleiter 5 hat hier die Y-Form, wobei die zwei Enden dieser Form die Kontur des Kühlergrillrahmens 2 kopieren und das dritte Ende quer durch den Kühlergrillrahmen 2 zum Blinker im unteren Bereich des Scheinwerfers verläuft. Der Lichtleiter 5 wirkt damit als die Verlängerung des Blinkers und vorteilhaft wird er dann aufblinken, wenn der Blinker aufblinkt. Alternativ muss der betreffende Teil des Lichtleiters 5 nicht über den Kühlergrillrahmen 2 durchgehen, sondern der Kühlergrillrahmen 2 kann an dieser Stelle unterbrochen werden und der Lichtleiter 5 durch die Spalte zwischen der oberen und unteren Hälfte des Kühlergrillrahmens 2 hindurchgeht. Es ist offensichtlich, dass die Form des Scheinwerfers, des Kühlergrills 3 und des Lichtleiters 5 beliebig anders sein kann, beispielsweise kann der Scheinwerfer genau auf die erfindungsgemäße Baugruppe anliegen, so dass zwischen dem Ende des Lichtleiters 5 und dem Anfang des Blinkers möglicherweise keine wesentliche Spalte besteht. Zusätzlich können die Lichtleisten 4 als Anzeige des Batterieladezustandes dienen, was beispielsweise bei Hybridfahrzeugen oder Elektrofahrzeugen eine vorteilhafte Funktion darstellt.

Für beide der oben genannten Beleuchtungsfunktionalitäten kann es vorteilhaft sein, wenn die Lichtleisten 4 auch für die Ausstrahlung eines farbigen Lichts, insbesondere orangefarbiges Licht für die Fahrtrichtungsanzeige ausgelegt sind oder ein orangefarbiger Lichtleiter 5 an der betreffenden Stelle an den Seiten des Kühlergrills 3 angeordnet wird. Die Ladezustandsanzeige kann z.B. mehrere farbige LEDs verwenden, die die Lichtleiste 4 bilden, z.B. kann die Lichtleiste 4 während des sukzessiven Batterieladens von Rot über Orange bis Grün leuchten. Eine weitere Funktion kann beispielsweise sein, dass die Lichtleiste 4 beim Entriegeln oder Verriegeln des Fahrzeugs für einige Sekunden aufleuchtet oder aufblinkt. Diese zusätzlichen Leuchtfunktionen der Baugruppe 1 des leuchtenden Kühlergrills können erfordern, dass die Baugruppe eine Steuereinheit für die Steuerung der Lichtleiste 4 umfasst oder dass die Lichtleiste 4 an die Steuereinheit des Fahrzeugs oder seiner Leuchten angeschlossen ist.

In allen oben genannten Ausführungen können andere Merkmale der Erfindung, die in der jeweiligen Ausführung oder jeweiligen Alternative nicht direkt erwähnt werden, wie in jeder anderen Ausführung oder jeder Kombination anderer Ausführungen implementiert werden. Also die Merkmale aus verschiedenen oben genannten Alternativen können miteinander kombiniert werden, sofern das Wesen dieser Merkmale und Alternativen es nicht direkt ausschließt. Insbesondere ist es beispielsweise möglich, verschiedene Formen des Kühlergrills 3 oder seiner Komponenten, verschiedene Formen des Lichtleiters 5, verschiedene Formen der Lichtleiste 4, unterschiedliche gegenseitige Anordnung des Lichtleiters 5 mit der Lichtleiste 4, verschiedene Beleuchtungsfunktionalitäten, verschiedene Arten der Narbung oder Homogenisierungselementen auf dem Kühlergrill 3 und/oder Lichtleiter 5 usw. zu kombinieren. Die Erfindung ist durch die anliegenden Ansprüche limitiert.

Gegenstand der Erfindung kann auch ein Personenkraftfahrzeug sein, das die oben beschriebene Baugruppe 1 des leuchtenden Kühlergrills in beliebiger der beschriebenen Ausführungen oder in einer anderen alternativen Ausführung umfasst. Standardmäßig wird die erfindungsgemäße Baugruppe durch ihren Kühlergrillrahmen 2 am betreffenden Fahrzeug befestigt, an denen dann der Kühlergrill 3 und ggf. andere Teile der Baugruppe angebracht werden, oder sie wird direkt durch den Kühlergrill 3 befestigt. In einigen Ausführungen der Baugruppe 1 des leuchtenden Kühlergrills kann der Kühlergrillrahmen 2 mit dem Kühlergrill 3 einstückig gebildet werden, in einigen Ausführungen kann der Übergang zwischen dem Kühlergrillrahmen 2 und dem Kühlergrill 3 nicht einmal sichtbar sein. Ein Beispiel derartigen Fahrzeugs mit einer erfindungsgemäßen Baugruppe ist in Fig. 1 dargestellt.

### Bezugszeichenliste

- 1 -: Baugruppe des leuchtenden Kühlergrills
- 2 -: Kühlergrillrahmen
- 3 -: Kühlergrill
- 4 -: Lichtleiste
- 5 -: Lichtleiter
- 6 -: Rippe
- 7 -: Hilfsrahmen
- 8 -: Lichteintrittsfläche
- 9 -: Erste Lichtaustrittsfläche
- 10 -: Zweite Lichtaustrittsfläche

## Patentansprüche

1. Baugruppe (1) eines leuchtenden Fahrzeugkühlergrills, bestehend aus einem Kühlergrillrahmen (2), einem Kühlergrill (3), einer Lichtleiste (4) und einem Lichtleiter (5), wobei der Kühlergrill (3) eine Frontseite, die vor das Fahrzeug gerichtet ist, und eine gegenüberliegende Rückseite, die in den Raum unter der Fahrzeugfrontklappe gerichtet ist, umfasst, wobei der Lichtleiter (5) eine Lichteintrittsfläche (8) umfasst und die Lichtleiste (4) entlang der Lichteintrittsfläche (8) verläuft, wobei der Kühlergrillrahmen (2), der Lichtleiter (5) und der Randbereich des Kühlergrills (3) zusammen einen Hohlraum abgrenzen,
wobei sich dieser Hohlraum auf der Frontseite des Kühlergrills (3) befindet und die Lichtleiste (4) in diesem Hohlraum angeordnet ist und der Lichtleiter (5) für die Ausstrahlung des Lichts von der Lichtleiste (4) vor das Fahrzeug und zur Frontseite des Kühlergrills (3) ausgelegt ist,
**dadurch gekennzeichnet, dass**
die Lichtleiste (4) und der Lichtleiter (5) für die Ausgabe von Lichtsignalen ausgelegt sind, wobei die Leuchtsignalisierung eine Fahrtrichtungsanzeige umfasst,
wobei der Lichtleiter (5) teilweise den Kühlergrillrahmen (2) überdeckt, und zwar an den Seiten des Kühlergrills (3), nahe einem Scheinwerfer, so dass dieser Teil des Lichtleiters (5), der für die Fahrtrichtungsänderungsanzeige bestimmt ist, so nah wie möglich an den Scheinwerfer heranreichbar ist und beim Blinken dieser Teil des Lichtleiters (5) als bündige Verlängerung des Blinkers im Scheinwerfer wirken kann, oder wobei der betreffende Teil des Lichtleiters (5) nicht über den Kühlergrillrahmen (2) durchgeht, sondern der Kühlergrillrahmen (2) an dieser Stelle unterbrochen ist und der Lichtleiter (5) durch die Spalte zwischen der oberen und unteren Hälfte des Kühlergrillrahmens (2) hindurchgeht.

2. Baugruppe (1) des leuchtenden Fahrzeugkühlergrills nach Anspruch 1, **dadurch gekennzeichnet, dass** der durch den Kühlergrillrahmen (2), den Lichtleiter (5) und den Randbereich des Kühlergrills (3) abgegrenzte Hohlraum wasserdicht verschlossen ist, wobei er ein Entlüftungselement zur Feuchtigkeitsabfuhr aufweist.

3. Baugruppe (1) des leuchtenden Fahrzeugkühlergrills nach einem der Ansprüche 1 bis 2, **dadurch gekennzeichnet, dass** der Lichtleiter (5) auf einem Teil seiner Oberfläche mit einem Abschirmelement beschichtet ist.

4. Baugruppe (1) des leuchtenden Fahrzeugkühlergrills nach einem der Ansprüche 1 bis 3, **dadurch gekennzeichnet, dass** der Lichtleiter (5) ferner zumindest zwei Lichtaustrittsflächen aufweist, wobei die erste Lichtaustrittsfläche (9) gegenüber der Lichteintrittsfläche (8) und die zweite Lichtaustrittsfläche (10) zwischen der ersten Lichtaustrittsfläche (9) und der Lichteintrittsfläche (8) angeordnet sind.

5. Baugruppe (1) des leuchtenden Fahrzeugkühlergrills nach Anspruch 4, **dadurch gekennzeichnet, dass** die erste Lichtaustrittsfläche (9) durch ihre Ausrichtung für die Ausstrahlung des Lichts von der Lichtleiste (4) vor das Fahrzeug ausgelegt ist.

6. Baugruppe (1) des leuchtenden Fahrzeugkühlergrills nach Anspruch 4, **dadurch gekennzeichnet, dass** die erste Lichtaustrittsfläche (9) durch ihre Ausrichtung für die Ausstrahlung des Lichts von der Lichtleiste (4) zur Frontseite des Kühlergrills (3) ausgelegt ist.

7. Baugruppe (1) des leuchtenden Fahrzeugkühlergrills nach einem der Ansprüche 1 bis 6, **dadurch gekennzeichnet, dass** der Lichtleiter (5) einen über den größten Teil der Länge des Lichtleiters (5) verlaufenden flachen Teil umfasst, wobei der flache Teil im Querschnitt eine viereckige Form mit einem Paar kürzerer einander gegenüberliegender Seiten und einem Paar längerer einander gegenüberliegender Seiten aufweist, wobei die längeren Seiten mindestens doppelt so lang wie jedwede der kürzeren Seiten sind, wobei eine der kürzeren Seiten für die Ausrichtung vor das Fahrzeug und eine der längeren Seiten für die Ausrichtung zur Frontseite des Kühlergrills (3) bestimmt sind.

8. Baugruppe (1) des leuchtenden Fahrzeugkühlergrills nach einem der Ansprüche 1 bis 7 **dadurch gekennzeichnet, dass** die Leuchtsignalisierung zusätzlich auch eine Batterieladezustandsanzeige oder Fahrzeugentriegelungs-/verriegelungsanzeige umfasst.

9. Baugruppe (1) des leuchtenden Fahrzeugkühlergrills nach einem der Ansprüche 1 bis 8, **dadurch gekennzeichnet, dass** die Frontseite des Kühlergrills (3) eine Narbung für die Ablenkung des einfallenden Lichts aufweist, wobei die Narbung für die Ablenkung des einfallenden Lichts aus Elementen besteht, die aus einer Menge umfassend Vorsprünge, Vertiefungen, Ritze, abgewinkelte Flächen und deren Kombinationen ausgewählt werden.

## Claims

1. Illuminated vehicle radiator grill assembly (1), consisting of a radiator grill frame (2), a radiator grill (3), a light strip (4) and a light guide (5), wherein the radiator grill (3) comprises a front side at the front of the vehicle and an opposite rear side facing the space below the vehicle bonnet, wherein the light guide (5) comprises a light-entry surface (8) and the light strip (4) runs along the light-entry surface (8), wherein the radiator grill frame (2), the light guide (5) and the peripheral region of the radiator grill (3) together define a cavity, wherein this cavity is located on the front side of the radiator grill (3) and the light strip (4) is arranged in this cavity, and the light guide (5) is configured to emit light from the light strip (4) at the front of the vehicle and towards the front side of the radiator grill (3),
**characterized in that**
the light strip (4) and the light guide (5) are configured to emit light signals, wherein the light signaling comprises a direction-of-travel indicator,
wherein the light guide (5) partially covers the radiator grill frame (2), specifically at the sides of the radiator grill (3), near a headlight, so that this part of the light guide (5), which is intended for the change of direction-of-travel indicator, can be positioned as close as possible to the headlight and, when blinking, this part of the light guide (5) can act as a flush extension of the indicator in the headlight, or wherein the relevant part of the light guide (5) does not pass beyond the radiator grill frame (2), but rather the radiator grill frame (2) is interrupted at this point and the light guide (5) passes through the gap between the upper and lower halves of the radiator grill frame (2).

2. Illuminated vehicle radiator grill assembly (1) according to claim 1, **characterized in that** the cavity defined by the radiator grill frame (2), the light guide (5) and the edge region of the radiator grill (3) is sealed watertight, and whereby it has a venting element for removing moisture.

3. Illuminated vehicle radiator grill assembly (1) according to any one of claims 1 to 2, **characterized in that** the light guide (5) is coated with a shielding element over part of its surface.

4. Illuminated vehicle radiator grill assembly (1) according to any one of claims 1 to 3, **characterized in that** the light guide (5) further comprises at least two light-emitting surfaces, wherein the first light-emitting surface (9) is arranged opposite the light-entry surface (8) and the second light-emitting surface (10) is arranged between the first light-emitting surface (9) and the light-entry surface (8).

5. Illuminated vehicle radiator grill assembly (1) according to claim 4, **characterized in that** the first light-emitting surface (9) is configured, by virtue of its orientation, to emit light from the light strip (4) at the front of the vehicle.

6. Illuminated vehicle radiator grill assembly (1) according to claim 4, **characterized in that** the first light-emitting surface (9) is configured, by virtue of its orientation, to emit light from the light strip (4) at the front side of the radiator grill (3).

7. Illuminated vehicle radiator grill assembly (1) according to any one of claims 1 to 6, **characterized in that** the light guide (5) comprises a flat portion extending over most of the length of the light guide (5), wherein the flat portion has a quadrilateral form in cross-section with a pair of shorter opposite sides and a pair of longer opposite sides, wherein the longer sides are at least twice as long as any of the shorter sides, wherein one of the shorter sides is intended for orientatation in front of the vehicle and one of the longer sides is intended for orientation to the front side of the radiator grill (3).

8. Illuminated vehicle radiator grill assembly (1) according to any one of claims 1 to 7, **characterized in that** the illuminated signaling additionally comprises a battery charge level indicator or a vehicle unlock/lock indicator.

9. Illuminated vehicle radiator grill assembly (1) according to any one of claims 1 to 8, **characterized in that** the front side of the radiator grill (3) has a textured surface for deflecting incident light, wherein the textured surface for deflecting incident light consists of elements which are selected from a set comprising protrusions, recesses, grooves, angled surfaces and combinations thereof.

## Revendications

1. Ensemble (1) d'une calandre éclairée de véhicule, constitué d'un cadre de calandre (2), d'une calandre (3), d'une bande lumineuse (4) et d'un guide de lumière (5), dans lequel la calandre (3) comprend une face avant tournée vers l'avant du véhicule et une face arrière opposée tournée vers l'espace situé sous le capot avant du véhicule, dans lequel le guide de lumière (5) comprend une surface d'entrée de lumière (8), et la bande lumineuse (4) s'étend le long de la surface d'entrée de lumière (8), dans lequel le cadre de calandre (2), le guide de lumière (5) et la zone de bord de la calandre (3) délimitent ensemble une cavité, dans lequel cette cavité se trouve sur la face avant de la calandre (3) et la bande lumineuse (4) est disposée dans cette cavité, et le guide de lumière (5) est conçu pour diriger la lumière de la bande lumineuse (4) à l'avant du véhicule et vers la face avant de la calandre (3),
**caractérisé en ce que**
la bande lumineuse (4) et le guide de lumière (5) sont conçus pour émettre des signaux lumineux, dans lequel la signalisation lumineuse comprend un indicateur de direction,
dans lequel le guide de lumière (5) recouvre partiellement le cadre de calandre (2), et ce, sur les côtés de la calandre (3), à proximité d'un phare, de sorte que cette partie du guide de lumière (5), qui est destinée à l'indicateur de changement direction, peut s'approcher aussi près que possible du phare et, lors du clignotement, cette partie du guide de lumière (5) peut agir en tant que prolongement affleurant du clignotant dans le phare, ou dans lequel la partie concernée du guide de lumière (5) ne traverse pas le cadre de calandre (2), mais le cadre de calandre (2) est interrompu à cet endroit et le guide de lumière (5) passe à travers l'interstice entre les moitiés supérieure et inférieure du cadre de calandre (2).

2. Ensemble (1) de la calandre éclairée de véhicule selon la revendication 1, **caractérisé en ce que** la cavité délimitée par le cadre de calandre (2), le guide de lumière (5) et la zone de bord de la calandre (3) est fermée de manière étanche à l'eau, dans lequel elle présente un élément de purge destiné à l'évacuation d'humidité.

3. Ensemble (1) de la calandre éclairée de véhicule selon l'une quelconque des revendications 1 à 2, **caractérisé en ce que** le guide de lumière (5) est recouvert d'un élément de protection sur une partie de sa surface.

4. Ensemble (1) de la calandre éclairée de véhicule selon l'une quelconque des revendications 1 à 3, **caractérisé en ce que** le guide de lumière (5) présente en outre au moins deux surfaces de sortie de lumière, dans lequel la première surface de sortie de lumière (9) est disposée en face de la surface d'entrée de lumière (8) et la seconde surface de sortie de lumière (10) est disposée entre la première surface de sortie de lumière (9) et la surface d'entrée de lumière (8).

5. Ensemble (1) de la calandre éclairée de véhicule selon la revendication 4, **caractérisé en ce que** la première surface de sortie de lumière (9) est conçue, par son orientation, pour émettre de la lumière via la bande lumineuse (4) à l'avant du véhicule.

6. Ensemble (1) de la calandre éclairée de véhicule selon la revendication 4, **caractérisé en ce que** la première surface de sortie de lumière (9) est conçue, par son orientation, pour émettre de la lumière via la bande lumineuse (4) vers la face avant de la calandre (3).

7. Ensemble (1) de la calandre éclairée de véhicule selon l'une quelconque des revendications 1 à 6, **caractérisé en ce que** le guide de lumière (5) comprend une partie plate s'étendant sur la plus grande partie de la longueur du guide de lumière (5), dans lequel la partie plate présente, en section transversale, une forme quadrangulaire avec une paire de côtés opposés plus courts et une paire de côtés opposés plus longs, dans lequel les côtés plus longs sont au moins deux fois plus longs que n'importe lequel des côtés plus courts, dans lequel l'un des côtés plus courts est destiné à être orienté devant le véhicule et l'un des côtés plus longs est destiné à être orienté vers la face avant de la calandre (3).

8. Ensemble (1) de la calandre éclairée de véhicule selon l'une quelconque des revendications 1 à 7, **caractérisé en ce que** la signalisation lumineuse comprend en outre un indicateur d'état de charge de batterie ou un indicateur de déverrouillage/verrouillage de véhicule.

9. Ensemble (1) de la calandre éclairée de véhicule selon l'une quelconque des revendications 1 à 8, **caractérisé en ce que** la face avant de la calandre (3) présente un grain destiné à dévier la lumière incidente, dans lequel le grain destiné à dévier la lumière incidente est constitué d'éléments qui sont sélectionnés parmi un ensemble comprenant des saillies, des creux, des rainures, des surfaces inclinées et leurs combinaisons.
